# EUROPEAN PATENT APPLICATION

(11) **EP 4 510 202 A1**
(43) Date of publication of application: **19.02.2025**
(21) Application number: 23866915.4
(22) Date of filing: 26.04.2023
(51) Int. Cl.: H01M 4/04

(54) **ELECTRODE ASSEMBLY, BATTERY CELL, BATTERY, AND ELECTRIC DEVICE**

(30) Priority: 22.09.2022 CN 202211154768
(71) Applicant: Jiangsu Contemporary Amperex Technology Limited, Changzhou, Jiangsu 213300 (CN); Contemporary Amperex Technology Co., Limited, Ningde, Fujian 352100 (CN)
(72) Inventor: XU, Hu, hangzhou, Jiangsu 213300 (CN); JIN, Haizu, hangzhou, Jiangsu 213300 (CN); NIU, Shaojun, hangzhou, Jiangsu 213300 (CN); ZHAO, Fenggang, hangzhou, Jiangsu 213300 (CN); ZENG, Yuqun, hangzhou, Jiangsu 213300 (CN)
(74) Representative: Ran, Handong
(86) International application number: PCT/CN2023/090770
(87) International publication number: WO 2024/060618

(57) **Abstract**

The present utility model relates to an electrode assembly (24), battery cells (22), a battery (20), and an electric device. The electrode assembly (24) comprises an anode sheet (100) and a cathode sheet (200); an anode active substance layer (120) is coated on at least one side surface of an anode current collector (110), and a cathode active substance layer (220) and an additional layer (230) are coated on at least one side surface of a cathode current collector (210); and on a plane perpendicular to the stacking direction of the anode sheet (100) and the cathode sheet (200), the projection of the anode active substance layer (120) covers the projection of the cathode active substance layer (220), and partially covers the projection of the additional layer (230). The battery (20) comprises the battery cells (22). The electric device comprises the battery cells (22) or the battery (20). The electrode assembly (24), the battery cells (22), the battery (20), and the electric device can mitigate or reduce cracking of electrode sheets.

## Description

### CROSS-REFERENCE TO RELATED APPLICATIONS

This application refers to Chinese Patent Application No. 202211154768.5, filed on September 22, 2022 and entitled "ELECTRODE ASSEMBLY, BATTERY CELL, BATTERY, AND ELECTRIC DEVICE", which is incorporated herein by reference in its entirety.

### TECHNICAL FIELD

This application relates to the field of battery technologies, and more specifically to an electrode assembly, a battery cell, a battery, and an electric device.

### BACKGROUND

In the battery manufacturing process, the anode electrode plate, cathode electrode plate, and separator are typically wound or stacked, followed by processes like hot pressing. Electrode plates are obtained by coating active substances onto current collectors. In electrode cells with wound or stacked electrode plates, electrode plate cracking is often found to varying degrees. Electrode plate cracking is likely to lead to a significant decline in battery performance and even safety hazards.

### SUMMARY

In view of this, this application discloses an electrode assembly, a battery cell, a battery, and an electric device.

An electrode assembly includes an anode electrode plate and a cathode electrode plate. The anode electrode plate includes an anode current collector, at least one side of the anode current collector is coated with an anode active substance layer, and the cathode electrode plate is stacked with the anode electrode plate. The cathode electrode plate includes a cathode current collector, at least one side of the cathode current collector is coated with a cathode active substance layer and an additional layer, the additional layer is a non-cathode active substance layer, and an edge of the additional layer is connected to an edge of the cathode active substance layer. In a plane perpendicular to the stacking direction of the anode electrode plate and the cathode electrode plate, a projection of the anode active substance layer covers a projection of the cathode active substance layer and partially covers a projection of the additional layer. In the foregoing electrode assembly, the additional layer connected to an edge of the cathode active substance layer is provided on the cathode current collector, and a projection of the additional layer is made to exceed a projection of the anode active substance layer on a plane perpendicular to the stacking direction of the anode electrode plate and the cathode electrode plate, so that the cathode electrode plate can be prevented from having sharp portions or step portions that would cause shear stress on the anode active substance layer of the anode electrode plate, thereby mitigating or reducing the occurrence of the electrode plate being scratched and cracked.

In some embodiments, the anode current collector has a first edge and a second edge that are disposed opposite each other in a first direction, with an anode tab provided at the first edge; and in the first direction, the additional layer is connected to a side of the cathode active substance layer closer to the anode tab. In this way, the additional layer is connected to a side of the cathode active substance layer closer to the anode tab, which can mitigate the shear stress generated by the side of the cathode active substance layer closer to the anode tab on the anode active substance layer of the anode electrode plate, thereby mitigating the problem of cracking at that site.

In some embodiments, the cathode active substance layer includes a second flat-coating zone and a second thinning zone that are disposed adjacent to each other. The second thinning zone is located on a side of the second flat-coating zone away from the anode tab in the first direction, and a coating thickness of the second thinning zone is less than that of the second flat-coating zone. In this way, the cathode active substance layer includes a second flat-coating zone and a second thinning zone that are disposed adjacent to each other. The second thinning zone reduces the thickness of the cathode active substance layer, which in turn can reduce the height of a step surface formed by the cathode active substance layer at a corresponding edge position, or eliminate the step surface formed by the cathode active substance layer at the corresponding edge position, thereby reducing the shear stress on the anode active substance layer of the anode electrode plate, and mitigating or reducing the shedding of the anode active substance layer at the edge of the anode electrode plate.

In some embodiments, the anode active substance layer includes a first flat-coating zone and a first thinning zone that are disposed adjacent to each other. The first thinning zone is located on a side of the first flat-coating zone closer to the anode tab in the first direction, and a coating thickness of the first thinning zone is less than that of the first flat-coating zone. In this way, the anode active substance layer includes a first flat-coating zone and a first thinning zone that are disposed adjacent to each other, effectively mitigating or reducing the shear stress on the anode active substance layer at the edge of the anode electrode plate.

In some embodiments, in the first direction, the first thinning zone has a width ranging from 1 mm to 30 mm, and the second thinning zone has a width ranging from 1 mm to 30 mm. In this way, the widths of the first thinning zone and the second thinning zone are in the optimal range, which can reduce shear stress while ensuring that the battery cell has the capacity to meet the requirements.

In some embodiments, the cathode active substance layer further includes a third thinning zone. The third thinning zone is located on a side of the second flat-coating zone away from the second thinning zone in the first direction, and a coating thickness of the third thinning zone is less than that of the second flat-coating zone. In this way, the shear stress by a step portion formed by the cathode active substance layer of the cathode electrode plate at the edge position on the anode active substance layer of the anode electrode plate can be reduced, thereby mitigating the problem of electrode plate cracking.

In some embodiments, the additional layer includes a fourth thinning zone. The fourth thinning zone is smoothly transitioned and connected to the third thinning zone, and a coating thickness of the fourth thinning zone is less than that of the third thinning zone. In this way, the thickness of the fourth thinning zone of the additional layer is less than that of the third thinning zone, which can further weaken or mitigate the shear stress on the anode active substance layer of the anode electrode plate due to the presence of thick step portions at the connection between the fourth thinning zone and the third thinning zone.

In some embodiments, in a plane perpendicular to the stacking direction of the anode electrode plate and the cathode electrode plate, the projection of the end of the fourth thinning zone away from the third thinning zone is not covered by the projection of the first thinning zone. In this way, it is possible to prevent the end of the fourth thinning zone of the additional layer away from the third thinning zone from generating shear stress on the first thinning zone.

In some embodiments, in a second direction, a fifth thinning zone is formed on at least one of two ends of the cathode active substance layer and/or two ends of the additional layer, and the first direction, the second direction, and the stacking direction of the anode electrode plate and the cathode electrode plate are perpendicular to each other. In this way, the cracking of the anode electrode plate and the cathode electrode plate can be further mitigated.

In some embodiments, the additional layer is a ceramic layer, a resistor layer, or an insulating layer, with a hardness lower than that of the anode active substance layer. In this way, the additional layer with a hardness lower than that of the anode active substance layer can reduce the risk of shear stress generated by the cathode electrode plate on the anode active substance layer of the anode electrode plate.

In some embodiments, the electrode assembly further includes an insulating member, the insulating member being provided between the cathode electrode plate and the anode electrode plate. In this way, the insulating member isolates the anode electrode plate and the cathode electrode plate that are adjacent, preventing the two adjacent electrode plates with opposite polarities from contacting and causing a short circuit.

A battery cell includes a housing, an electrode assembly, and the foregoing end cover assembly. The housing has an opening, the end cover assembly covers the opening, and the electrode assembly is accommodated in the housing. The foregoing battery cell reduces the risk of electrode plate cracking in the electrode assembly and ensures that the battery cell has the capacity to meet the requirements of use.

A battery includes a box and the foregoing battery cells, where the battery cells are arranged in the box. In the battery, the battery cells are highly safety and have large capacity.

An electric device includes the foregoing battery cells, the battery cells being configured to supply electrical energy, or includes the foregoing battery, the battery being configured to supply electrical energy. In the electric device, the battery has a long battery life.

### BRIEF DESCRIPTION OF DRAWINGS

FIG. 1 a schematic diagram of a vehicle in an embodiment according to this application;
FIG. 2 is a schematic diagram of a battery in an embodiment according to this application;
FIG. 3 is a schematic diagram of a battery cell in an embodiment according to this application;
FIG. 4 is a schematic diagram of an electrode assembly in an embodiment according to this application; and
FIG. 5 is a schematic diagram of an electrode assembly in another embodiment according to this application.

### Reference signs

10. vehicle; 11. controller; 12. motor; 20. battery; 21. box; 21a. first portion; 21b. second portion; 22. battery cell; 23. housing; 23a. opening; 24. electrode assembly; 25. end cover assembly; 100. anode electrode plate; 110. anode current collector; 110a. first edge; 110b. second edge; 111. first main body portion; 112. anode tab; 120. anode active substance layer; 121. first flat-coating zone; 122. first thinning zone; 200. cathode electrode plate; 210. cathode current collector; 211. second main body portion; 212. cathode tab; 220. cathode active substance layer; 221. second flat-coating zone; 222. second thinning zone; 223. third thinning zone; 230. additional layer; 231. fourth thinning zone; 300. insulating member; X. width direction; Y. length direction; and Z. thickness direction.

### DESCRIPTION OF EMBODIMENTS

To make the objectives, features and advantages of this application more comprehensible, the following further describes specific implementations of this application in detail with reference to the accompanying drawings. In the following description, many specific details are set forth to provide a thorough understanding of this application. However, this application can be implemented in many other ways different from those described herein, and those skilled in the art can make similar improvements without violating the connotation of this application. Therefore, this application is not limited by the specific embodiments disclosed below.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for the ease and brevity of description of the embodiments of this application rather than indicating or implying that the apparatuses or components mentioned must have specific orientations or must be constructed or manipulated according to specific orientations, and therefore shall not be construed as any limitations on the embodiments of this application.

In addition, the terms "first" and "second" are merely for the purpose of description and shall not be understood as any indication or implication of relative importance or any implicit indication of the number of the technical features indicated. Therefore, a feature limited by the term "first", "second", or the like can explicitly or implicitly include one or more such features. In the description of this application, "a plurality of" means at least two, for example, two or three, unless otherwise specifically stated.

In this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements, unless otherwise specifically stated. Persons of ordinary skills in the art can understand specific meanings of these terms in this application as appropriate to specific situations.

In the description this application, unless otherwise expressly specified and defined, the first feature being "above" or "below" the second feature may mean that the first feature is in direct contact with the second feature or may mean that the first feature and the second feature come into contact indirectly through an intermediary. Moreover, that the first feature is "above", "over", and "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

It should be noted that when an element is referred to as being "fixed to" or "disposed on" another element, it may be directly fixed to the another element, or there may be an element therebetween. When an element is referred to as being "connected to" another element, it may be directly connected to the another element, or there may be an element therebetween. The terms "perpendicular", "horizontal", "upper", "lower", "left", "right", and other similar expressions as used herein are for illustration only instead of indicating the only embodiment.

With popularization and promotion of new energy vehicles, charge and discharge performance, endurance, and the like of new energy vehicles have attracted increasingly more attention. Electric vehicle batteries are rechargeable batteries that serve as power source for new energy vehicles and are widely used in the field of new energy vehicles.

In the battery manufacturing process, the anode electrode plate, cathode electrode plate, and separator are typically wound or stacked, followed by processes like hot pressing. electrode plates are obtained by coating active substances onto current collectors. In electrode cells with wound or stacked electrode plates, electrode plate cracking is often found to varying degrees. electrode plate cracking is likely to lead to a significant decline in battery performance and even safety hazards.

In view of the foregoing considerations, after in-depth research, an electrode assembly, a battery cell, a battery, and an electric device have been designed. In an electrode assembly of a battery cell, an additional layer connected to an edge of a cathode active substance layer is provided on a cathode current collector, and a projection of the additional layer is made to exceed a projection of an anode active substance layer on a plane perpendicular to a stacking direction of an anode electrode plate and an cathode electrode plate, so that the cathode electrode plate can be prevented from having sharp portions or step portions that would cause shear stress on the anode active substance layer of the anode electrode plate, thereby mitigating or reducing the occurrence of the electrode plate being scratched and cracked.

An embodiment of this application provides an electric device that uses a battery as a power supply. The electric device may be but is not limited to a mobile phone, a tablet, a notebook computer, an electric toy, an electric tool, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device of an embodiment of this application being a vehicle 10 is used as an example for description of the following embodiments.

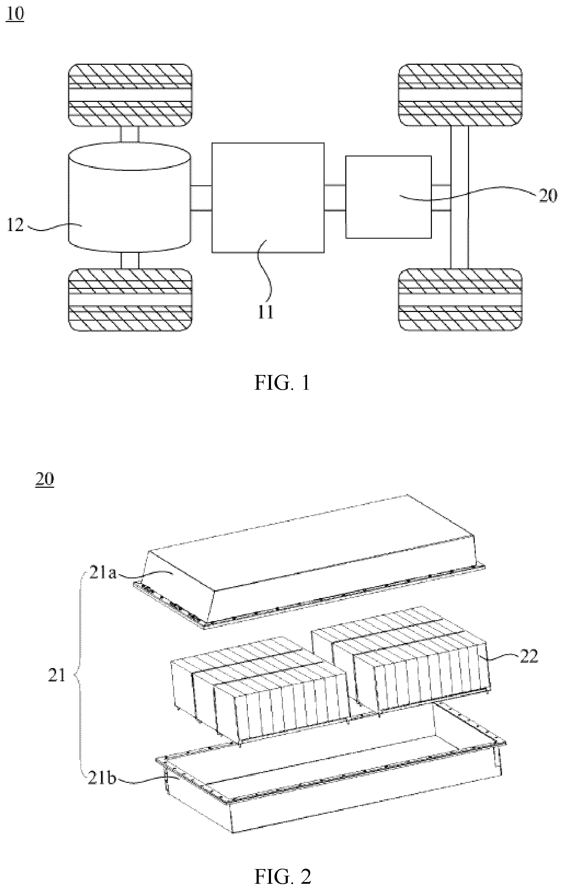

Referring to FIG. 1, FIG. 1 is a schematic structural diagram of the vehicle 10 according to an embodiment of this application. The vehicle 10 may be a fossil fuel vehicle, a natural gas vehicle, or a new energy vehicle. The new energy vehicle may be a battery electric vehicle, a hybrid electric vehicle, a range-extended electric vehicle, or the like. The vehicle 10 is provided with a battery 20 inside, and the battery 20 may be disposed at the bottom, front, or rear of the vehicle 10. The battery 20 may be configured to supply power to the vehicle 10. For example, the battery 20 may be used as an operational power supply for the vehicle 10. The vehicle 10 may further include a controller 11 and a motor 12, where the controller 11 is configured to control the battery 20 to supply power to the motor 12, for example, to satisfy power needs of start, navigation, and driving of the vehicle 10. In some other embodiments of this application, the battery 20 can be used as not only the operational power supply for the vehicle 10 but also a driving power supply for the vehicle 10, replacing or partially replacing fossil fuel or natural gas to provide driving power for the vehicle 10.

Referring to FIG. 2, FIG. 2 is an exploded view of a battery 20 according to an embodiment of this application. The battery 20 includes a box 21 and battery cells 22, where the battery cells 22 are accommodated in the box 21. The box 21 is configured to provide an accommodating space for the battery cell 22. The box 21 may be a variety of structures. In some embodiments, the box 21 may include a first portion 21a and a second portion 21b. The first portion 21a and the second portion 21b fit together to jointly define an accommodating space for accommodating the battery cells 22. The second portion 21b may be a hollow structure with an opening at one end, the first portion 21a may be a plate-shaped structure, and the first portion 21a covers the opening side of the second portion 21b so that the first portion 21a and the second portion 21b jointly define the accommodating space. Alternatively, both the first portion 21a and the second portion 21b may be hollow structures with an opening at one side, and the opening side of the first portion 21a is engaged with the opening side of the second portion 21b. Certainly, the box 21 formed by the first portion 21a and the second portion 21b may be of various shapes, for example, cylinder or cuboid.

In the battery 20, the battery cells 22 may be present in plurality, and the plurality of battery cells 22 may be connected in series, parallel, or series-parallel, where being connected in series-parallel means a combination of series and parallel connections of the plurality of battery cells 22. The plurality of battery cells 22 may be directly connected in series, parallel, or series-parallel, and then an entirety of the plurality of battery cells 22 is accommodated in the box 21; or certainly, the battery 20 may be formed by a plurality of battery cells 22 being connected in series, parallel, or series-parallel first to form a battery module and then a plurality of battery modules being connected in series, parallel, or series-parallel to form an entirety which is accommodated in the box 21.

Each battery cell 22 may be a secondary battery or a primary battery, or may be a lithium-sulfur battery, a sodium-ion battery, or a magnesium-ion battery, without being limited thereto. The battery cell 22 may be cylindrical, flat, cuboid, or of other shapes. In some embodiments of this application, the battery cell 22 may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell 22 may be cylindrical, flat, cuboid, or of other shapes, which is not limited in the embodiments of this application either.

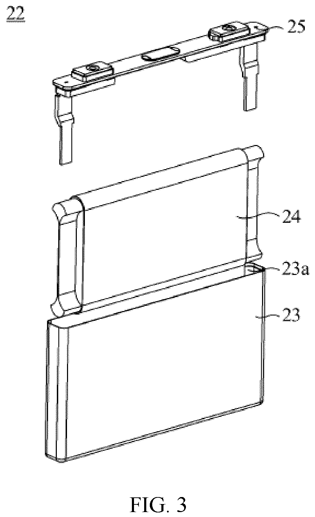

The following provides a detailed description of any battery cell 22. As shown in FIG. 3, the battery cell 22 includes a housing 23, an electrode assembly 24, and an end cover assembly 25. The housing 23 is a hollow cuboid or cube, and one of the planes of the housing 23 is a plane with an opening 23a, and the plane is configured to have no wall body, so that the inside and outside of the housing 23 are in communication with each other. The end cover assembly 25 covers the opening 23a and is connected to the housing 23 to form an enclosed chamber for placing the electrode assembly 24, and the enclosed chamber is filled with an electrolyte, such as an electrolyte solution.

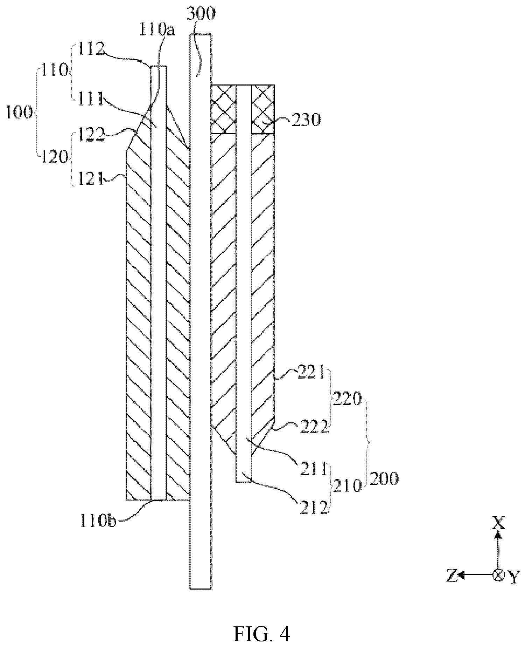

Referring to FIG. 3 and FIG. 4, an electrode assembly 24 in an embodiment includes an anode electrode plate 100 and a cathode electrode plate 200. The cathode electrode plate 200 and the anode electrode plate 100 are stacked. The anode electrode plate 100 includes an anode current collector 110, and at least one side of the anode current collector 110 is coated with an anode active substance layer 120. The cathode electrode plate 200 includes a cathode current collector 210, and at least one side of the cathode current collector 210 is coated with a cathode active substance layer 220 and an additional layer 230. The additional layer 230 is a non-cathode active substance layer 220, and an edge of the additional layer 230 is connected to an edge of the cathode active substance layer 220.

In a plane perpendicular to a stacking direction of the anode electrode plate 100 and the cathode electrode plate 200, a projection of the anode active substance layer 120 covers a projection of the cathode active substance layer 220 and partially covers a projection of the additional layer 230.

Here, the stacking direction of the anode electrode plate 100 and the cathode electrode plate 200 is direction Z shown in FIG. 4, that is, thickness direction of the anode electrode plate 100 and the cathode electrode plate 200.

In some embodiments of this application, an electrode assembly 24 can be formed by winding or stacking an anode electrode plate 100 and a cathode electrode plate 200.

In some embodiments of this application, the anode current collector 110 is a member or part that carries the anode active substance layer 120 and collects and outputs the current generated by an anode active substance. The anode active substance includes at least one of lithium nickel cobalt manganese oxide, lithium iron phosphate, lithium nickelate, lithium nickel manganate, lithium manganese iron nickelate, or carbon materials (graphite, hard carbon, soft carbon, carbon nanotubes, or graphene), where graphite includes at least one of artificial graphite, natural graphite, or mesocarbon microbeads.

In some embodiments of this application, the cathode current collector 210 is a member or part that carries the cathode active substance layer 220 and collects and outputs the current generated by a cathode active substance. The cathode active substance includes at least one of lithium titanate, silicon negative electrode, silicon-carbon negative electrode, lithium metal negative electrode materials, tin-based negative electrode materials, or tin oxide negative electrode materials.

In the foregoing electrode assembly 24, the additional layer 230 connected to an edge of the cathode active substance layer 220 is provided on the cathode current collector 210, and a projection of the additional layer 230 is made to exceed a projection of the anode active substance layer 120 on a plane perpendicular to the stacking direction of the anode electrode plate 100 and the cathode electrode plate 200, so that the cathode electrode plate 200 can be prevented from having sharp portions or step portions that would cause shear stress on the anode active substance layer 120 of the anode electrode plate 100, thereby mitigating or reducing the occurrence of the electrode plate being scratched and cracked.

According to some embodiments of this application, referring to FIG. 4, the anode current collector 110 has a first edge 110a and a second edge 110b that are disposed opposite each other in a first direction, with an anode tab 112 provided at the first edge 110a; and in the first direction, the additional layer 230 is connected to a side of the cathode active substance layer 220 closer to the anode tab 112.

Here, the first direction is direction X shown in FIG. 4.

In this embodiment, the anode tab 112 and the anode current collector 110 are formed as an integral structure. In other embodiments, the anode tab 112 and the anode current collector 110 may alternatively be separate structures, that is, the anode tab 112 is additionally provided at the first edge 110a of the anode current collector 110.

In the foregoing arrangement, the additional layer 230 is connected to a side of the cathode active substance layer 220 closer to the anode tab 112, which can mitigate the shear stress generated by the side of the cathode active substance layer 220 closer to the anode tab 112 on the anode active substance layer 120 of the anode electrode plate 100, thereby mitigating the problem of cracking at that site.

In some embodiments of this application, referring to FIG. 4, the anode active substance layer 120 includes a first flat-coating zone 121 and a first thinning zone 122 that are disposed adjacent to each other. The first thinning zone 122 is located on a side of the first flat-coating zone 121 closer to the anode tab 112 in the first direction, and a coating thickness of the first thinning zone 122 is less than that of the first flat-coating zone 121.

In some embodiments of this application, the thickness of the anode active substance layer 120 of the first thinning zone 122 gradually decreases in a first direction from the first flat-coating zone 121 to the first thinning zone 122, and the thickness of the anode active substance layer 120 of the first flat-coating zone 121 is uniform.

In the foregoing arrangement, the anode active substance layer 120 includes the first flat-coating zone 121 and the first thinning zone 122 that are disposed adjacent to each other, effectively mitigating or reducing the shear stress on the anode active substance layer 120 at the edge of the anode electrode plate 100.

According to some embodiments of this application, referring to FIG. 4, the cathode active substance layer 220 includes a second flat-coating zone 221 and a second thinning zone 222 that are disposed adjacent to each other. The second thinning zone 222 is located on a side of the second flat-coating zone 221 away from the anode tab 112 in the first direction, and the coating thickness of the second thinning zone 222 is less than that of the second flat-coating zone 221.

In some embodiments of this application, the thickness of the anode active substance layer 120 of the second thinning zone 222 gradually decreases in the first direction from the second flat-coating zone 221 to the second thinning zone 222, and the thickness of the anode active substance layer 120 of the second flat-coating zone 221 is uniform.

In some embodiments of this application, a cathode tab 212 is provided at an edge of the cathode current collector 210. The cathode tab 212 and the anode tab 112 are located on opposite sides in the first direction. Alternatively, the cathode tab 212 and the anode tab 112 may alternatively be located on a same side in the first direction.

In the foregoing arrangement, the cathode active substance layer 220 includes a second flat-coating zone 221 and a second thinning zone 222 that are disposed adjacent to each other. The second thinning zone 222 reduces the thickness of the cathode active substance layer 220, which in turn can reduce the height of a step surface formed by the cathode active substance layer 220 at a corresponding edge position, or eliminate the step surface formed by the cathode active substance layer 220 at the corresponding edge position, thereby reducing the shear stress on the anode active substance layer 120 of the anode electrode plate 100, and mitigating or reducing the shedding of the anode active substance layer 120 at the edge of the anode electrode plate 100.

According to some embodiments of this application, referring to FIG. 4, in the first direction, the first thinning zone 122 has a width ranging from 1 mm to 30 mm, and the second thinning zone 222 has a width ranging from 1 mm to 30 mm.

Here, the width direction is direction X shown in FIG. 4, and the widths of the first thinning zone 122 and the second thinning zone 222 are dimensions along the direction X shown in FIG. 4.

It can be understood that if the width of the first thinning zone 122 and the width of the second thinning zone 222 are too large, the percentage of the active substance decreases, thereby affecting the capacity of the battery cell 22; and if the width of the first thinning zone 122 and the width of the second thinning zone 222 are too small, the shear stress cannot be reduced.

In the foregoing arrangement, the widths of the first thinning zone 122 and the second thinning zone 222 are in the optimal range, which can reduce shear stress while ensuring that the battery cell 22 has the capacity to meet the requirements.

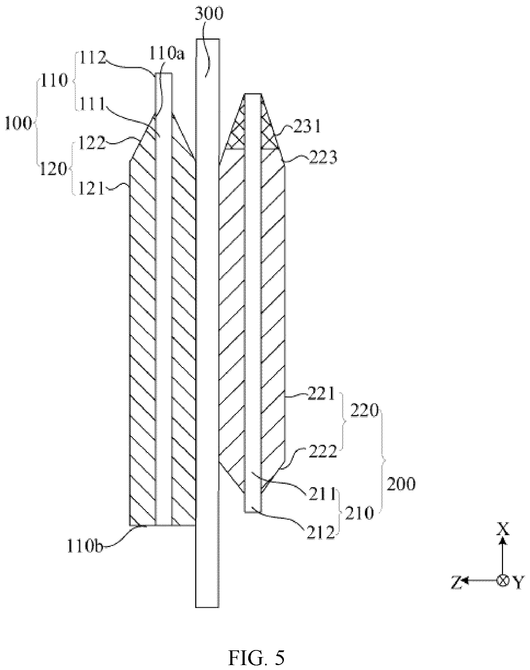

According to some embodiments of this application, referring to FIG. 5, the cathode active substance layer 220 further includes a third thinning zone 223. The third thinning zone 223 is located on a side of the second flat-coating zone 221 away from the second thinning zone 222 in the first direction, and a coating thickness of the third thinning zone 223 is less than that of the second flat-coating zone 221.

According to some embodiments of this application, the thickness of the cathode active substance layer 220 of the third thinning zone 223 gradually decreases in the first direction from the second flat-coating zone 221 to the third thinning zone 223.

Here, the third thinning zone 223 and the first thinning zone 122 are located on a same side in the first direction. During winding or stacking the anode electrode plate 100 and the cathode electrode plate 200, there will be compressive stress between the third thinning zone 223 of the cathode electrode plate 200 and the third thinning zone 223 of the anode electrode plate 100.

In the foregoing arrangement, the cathode electrode plate 200 can be prevented from having sharp portions or step portions that would cause shear stress on the anode active substance layer 120 of the anode electrode plate 100 The shear stress by a step portion formed by the cathode active substance layer 220 of the cathode electrode plate 200 at the edge position on the anode active substance layer 120 of the anode electrode plate 100 can be reduced, thereby mitigating the problem of electrode plate cracking.

According to some embodiments of this application, referring to FIG. 5, the additional layer 230 includes a fourth thinning zone 231. The fourth thinning zone 231 is smoothly transitioned and connected to the third thinning zone 223, and a coating thickness of the fourth thinning zone 231 is less than that of the third thinning zone 223.

In some embodiments of this application, in the first direction, the thickness of the additional layer 230 of the fourth thinning zone 231 gradually decreases, and the thickness of the cathode active substance layer 220 of the third thinning zone 223 also gradually decreases. The slope of the third thinning zone 223 equals that of the fourth thinning zone 231 to make a smooth transition and connection between the third thinning zone 223 and the fourth thinning zone 231. That is, the minimum thickness of the third thinning zone 223 equals the maximum thickness of the fourth thinning zone 231.

In the foregoing arrangement, sharp portions or step portions can be further prevented from appearing at the connection between the fourth thinning zone 231 and the third thinning zone 223 to generate shear stress on the anode electrode plate 100. The thickness of the fourth thinning zone 231 of the additional layer 230 is less than the coating thickness of the third thinning zone 223, which can further weaken or mitigate the shear stress on the anode active substance layer 120 of the anode electrode plate 100 due to the presence of thick step portions at the connection between the fourth thinning zone 231 and the third thinning zone 223.

According to some embodiments of this application, referring to FIG. 5, in a plane perpendicular to the stacking direction of the anode electrode plate 100 and the cathode electrode plate 200, a projection of an end of the fourth thinning zone 231 away from the third thinning zone 223 is not covered by a projection of the first thinning zone 122.

Optionally, the third thinning zone 223 has a width ranging from 1 mm to 30 mm, and the fourth thinning zone 231 has a width ranging from 1 mm to 30 mm. In this way, the shear stress on the cathode electrode plate 200 can be effectively reduced while ensuring that the battery cell 22 has the capacity to meet the requirements.

In the foregoing arrangement, it is possible to prevent the end of the fourth thinning zone 231 of the additional layer 230 away from the third thinning zone 223 from generating shear stress on the first thinning zone 122.

According to some embodiments of this application, referring to FIG. 5, in a second direction, a fifth thinning zone is formed on at least one of two ends of the cathode active substance layer 220 and/or two ends of the additional layer 230, and the first direction, the second direction, and the stacking direction of the anode electrode plate 100 and the cathode electrode plate 200 are perpendicular to each other.

Here, the second direction is direction Y shown in FIG. 5, that is, length direction of the anode electrode plate 100 and the cathode electrode plate 200. When the fifth thinning zone is provided on the cathode active substance layer 220 in the second direction, the thickness of the cathode active substance layer 220 of the fifth thinning zone gradually decreases in the second direction. When the fifth thinning zone is provided on the additional layer 230 in the second direction, the thickness of the additional layer 230 of the fifth thinning zone gradually decreases in the second direction.

Preferably, when the length of the anode electrode plate 100 and the cathode electrode plate 200 is less than or equal to 600 mm, a fifth thinning zone may be provided on the cathode active substance layer 220 and/or the additional layer 230 in the second direction different from the first direction, to further reduce the risk of electrode plate cracking.

**In** the foregoing arrangement, the cracking of the anode electrode plate 100 and the cathode electrode plate 200 can be further mitigated.

According to some embodiments of this application, referring to FIG. 5, the additional layer 230 is a ceramic layer, a resistor layer, or an insulating layer, with a hardness lower than that of the anode active substance layer 120.

In some embodiments of this application, the additional layer 230 may alternatively be other substances with high resistance and low specific capacity that are different from the first active substance.

In the foregoing arrangement, the additional layer 230 with a hardness lower than that of the anode active substance layer 120 can reduce the risk of shear stress generated by the cathode electrode plate 200 on the anode active substance layer 120 of the anode electrode plate 100.

According to some embodiments of this application, referring to FIG. 5, the electrode assembly 24 further includes an insulating member 300, the insulating member 300 being provided between the cathode electrode plate 200 and the anode electrode plate 100.

In some embodiments of this application, the insulating member 300 is a separator. The separator is insulating and used to isolate the anode electrode plate 100 and the cathode electrode plate 200 that are adjacent, preventing the two adjacent electrode plates with opposite polarities from contacting and causing a short circuit. The separator may be made of an organic polymer insulating material, an inorganic insulating material, or a composite material. Preferably, the composite material is composed of an organic polymer insulating material and an inorganic insulating material.

In the foregoing arrangement, the insulating member 300 isolates the anode electrode plate 100 and the cathode electrode plate 200 that are adjacent, preventing the two adjacent electrode plates with opposite polarities from contacting and causing a short circuit.

Referring to FIG. 3, a battery cell 22 in an embodiment includes a housing 23, an end cover assembly 25, and the foregoing electrode assembly 24. The housing 23 has an opening 23a, and the end cover assembly 25 covers the opening 23a, with the electrode assembly 24 accommodated in the housing 23.

In some embodiments of this application, the housing 23 is an assembly configured to cooperate with the end cover assembly 25 to form an internal environment of the battery cell 22, where the formed internal environment can be used to accommodate the electrode assembly 24, an electrolyte solution, and other components. The housing 23 and the end cover assembly 25 may be independent components, an opening 23a may be formed in the housing 23, and the end cover assembly 25 covers the opening 23a to form the internal environment of the battery cell 22. The housing 23 and the end cover assembly 25 are not limited and may also be integrated. Specifically, the housing 23 and the end cover assembly 25 may form a shared connection surface before other components are disposed in the housing, and then the housing 23 is covered with the end cover assembly 25 when inside of the housing 23 needs to be enclosed. The housing 23 may be of various shapes and sizes, such as a cuboid shape, a cylindrical shape, and a hexagonal prism shape. Specifically, a shape of the housing 23 may be determined according to a specific shape and size of the electrode assembly 24. The housing 23 may be made of various substances, such as copper, iron, aluminum, stainless steel, aluminum alloy, and plastic, which are not particularly limited in the embodiments of this application.

The foregoing battery cell 22 reduces the risk of electrode plate cracking in the electrode assembly 24 and ensures that the battery cell 22 has the capacity to meet the requirements of use.

Referring to FIG. 2, a battery 20 in an embodiment includes a box 21 and the foregoing battery cells 22, the battery cells 22 being arranged in the box 21. In the battery 20, the battery cells 22 are highly safety and have large capacity.

Referring to FIG. 1 and FIG. 2, an electric device in an embodiment includes the foregoing battery cells 22, the battery cells 22 being configured to supply electrical energy, or includes the foregoing battery 20, the battery 20 being configured to supply electrical energy. In the electric device, the battery 20 has a long battery life.

According to some embodiments of this application, referring to FIG. 4 and FIG. 5, an electrode assembly 24 in an embodiment includes an anode electrode plate 100, a cathode electrode plate 200, and an insulating member 300. The cathode electrode plate 200 and the anode electrode plate 100 are stacked, and the insulating member 300 is provided between the cathode electrode plate 200 and the anode electrode plate 100. The anode electrode plate 100 includes an anode current collector 110, and at least one side of the anode current collector 110 is coated with an anode active substance layer 120. The cathode electrode plate 200 includes a cathode current collector 210, and at least one side of the cathode current collector 210 is coated with a cathode active substance layer 220 and an additional layer 230. The additional layer 230 is a ceramic layer, a resistor layer, or an insulating layer, with a hardness lower than that of the anode active substance layer 120, and an edge of the additional layer 230 is connected to an edge of the cathode active substance layer 220. In a plane perpendicular to a stacking direction of the anode electrode plate 100 and the cathode electrode plate 200, a projection of the anode active substance layer 120 covers a projection of the cathode active substance layer 220 and partially covers a projection of the additional layer 230.

The anode active substance layer 120 includes a first flat-coating zone 121 and a first thinning zone 122 that are disposed adjacent to each other. The first thinning zone 122 is located on a side of the first flat-coating zone 121 closer to the anode tab 112 in the first direction, and a coating thickness of the first thinning zone 122 is less than that of the first flat-coating zone 121. The cathode active substance layer 220 includes a second flat-coating zone 221 and a second thinning zone 222 that are disposed adjacent to each other. The second thinning zone 222 is located on a side of the second flat-coating zone 221 away from the anode tab 112 in the first direction, and the coating thickness of the second thinning zone 222 is less than that of the second flat-coating zone 221. The cathode active substance layer 220 further includes a third thinning zone 223. The third thinning zone 223 is located on a side of the second flat-coating zone 221 away from the second thinning zone 222 in the first direction, and a coating thickness of the third thinning zone 223 is less than that of the second flat-coating zone 221. The additional layer 230 includes a fourth thinning zone 231. The fourth thinning zone 231 is smoothly transitioned and connected to the third thinning zone 223, and a coating thickness of the fourth thinning zone 231 is less than that of the third thinning zone 223. In a plane perpendicular to the stacking direction of the anode electrode plate 100 and the cathode electrode plate 200, a projection of an end of the fourth thinning zone 231 away from the third thinning zone 223 is not covered by a projection of the first thinning zone 122. In a second direction, a fifth thinning zone is formed on at least one of two ends of the cathode active substance layer 220 and/or two ends of the additional layer 230.

According to some embodiments of this application, referring to FIG. 3, a battery cell 22 in an embodiment includes a housing 23, an end cover assembly 25, and the foregoing electrode assembly 24. The housing 23 has an opening 23a, and the end cover assembly 25 covers the opening 23a, with the electrode assembly 24 accommodated in the housing 23.

According to some embodiments of this application, referring to FIG. 2, a battery 20 in an embodiment includes a box 21 and the foregoing battery cells 22, the battery cells 22 being arranged in the box 21.

According to some embodiments of this application, referring to FIG. 1 and FIG. 2, an electric device in an embodiment includes the foregoing battery cells 22, the battery cells 22 being configured to supply electrical energy, or includes the foregoing battery 20, the battery 20 being configured to supply electrical energy.

Technical features in the foregoing embodiments may be combined in any way. For brevity of description, not all possible combinations of the technical features in the foregoing embodiments are described. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application patent. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. An electrode assembly (24), comprising:
an anode electrode plate (100) comprising an anode current collector (110), wherein at least one side of the anode current collector (110) is coated with an anode active substance layer (120); and
a cathode electrode plate (200) stacked with the anode electrode plate (100), wherein the cathode electrode plate (200) comprises a cathode current collector (210), at least one side of the cathode current collector (210) is coated with a cathode active substance layer (220) and an additional layer (230), the additional layer (230) is a non-cathode active substance layer, and an edge of the additional layer (230) is connected to an edge of the cathode active substance layer (220),
wherein in a plane perpendicular to a stacking direction of the anode electrode plate (100) and the cathode electrode plate (200), a projection of the anode active substance layer (120) covers a projection of the cathode active substance layer (220) and partially covers a projection of the additional layer (230).

2. The electrode assembly (24) according to claim 1, wherein the anode current collector (110) has a first edge (110a) and a second edge (110b) that are disposed opposite each other in a first direction, with an anode tab (112) provided at the first edge (110a); and in the first direction, the additional layer (230) is connected to a side of the cathode active substance layer (220) closer to the anode tab (112).

3. The electrode assembly (24) according to claim 2, wherein the cathode active substance layer (220) comprises a second flat-coating zone (221) and a second thinning zone (222) that are disposed adjacent to each other, the second thinning zone (222) is located on a side of the second flat-coating zone (221) away from the anode tab (112) in the first direction, and a coating thickness of the second thinning zone (222) is less than that of the second flat-coating zone (221).

4. The electrode assembly (24) according to claim 3, wherein the anode active substance layer (120) comprises a first flat-coating zone (121) and a first thinning zone (122) that are disposed adjacent to each other, the first thinning zone (122) is located on a side of the first flat-coating zone (121) closer to the anode tab (112) in the first direction, and a coating thickness of the first thinning zone (122) is less than that of the first flat-coating zone (121).

5. The electrode assembly (24) according to claim 4, wherein in the first direction, the first thinning zone (122) has a width ranging from 1 mm to 30 mm, and the second thinning zone (222) has a width ranging from 1 mm to 30 mm.

6. The electrode assembly (24) according to any one of claims 4 and 5, wherein the cathode active substance layer (220) further comprises a third thinning zone (223), the third thinning zone (223) is located on a side of the second flat-coating zone (221) away from the second thinning zone (222) in the first direction, and a coating thickness of the third thinning zone (223) is less than that of the second flat-coating zone (221).

7. The electrode assembly (24) according to claim 6, wherein the additional layer (230) comprises a fourth thinning zone (231), the fourth thinning zone (231) is smoothly transitioned and connected to the third thinning zone (223), and a coating thickness of the fourth thinning zone (231) is less than that of the third thinning zone (223).

8. The electrode assembly (24) according to claim 7, wherein in a plane perpendicular to the stacking direction of the anode electrode plate (100) and the cathode electrode plate (200), a projection of an end of the fourth thinning zone (231) away from the third thinning zone (223) is not covered by a projection of the first thinning zone (122).

9. The electrode assembly (24) according to any of claims 2 to 8, wherein in a second direction, a fifth thinning zone is formed on at least one of two ends of the cathode active substance layer (220) and/or two ends of the additional layer (230), and the first direction, the second direction, and the stacking direction of the anode electrode plate (100) and the cathode electrode plate (200) are perpendicular to each other.

10. The electrode assembly (24) according to any of claims 1 to 9, wherein the additional layer (230) is a ceramic layer, a resistor layer, or an insulating layer, with a hardness lower than that of the anode active substance layer (120).

11. The electrode assembly (24) according to any of claims 1 to 10, wherein the electrode assembly (24) further comprises an insulating member (300), the insulating member (300) provided between the cathode electrode plate (200) and the anode electrode plate (100).

12. A battery cell (22), comprising:
a housing (23) with an opening (23a);
an end cover assembly (25) covering the opening (23a); and
the electrode assembly (24) according to any of claims 1 to 11, accommodated in the housing (23).

13. A battery (20), comprising a box (21) and the battery cells (22) according to claim 12, the battery cells (22) disposed in the box (21).

14. An electric device, comprising the battery cells (22) according to claim 12, the battery cells (22) configured to supply electrical energy, or comprising the battery (20) according to claim 13, the battery (20) configured to supply electrical energy.
